(19) Europäisches Patentamt
European Patent Office
Office européen des brevets

(11) **EP 4 361 116 A1**

(12) **EUROPEAN PATENT APPLICATION**

(43) Date of publication:
   **01.05.2024   Bulletin 2024/18**

(21) Application number: **23152810.0**

(22) Date of filing: **23.01.2023**

(51) International Patent Classification (IPC):
   **C04B 28/14** (2006.01)       **C04B 24/38** (2006.01)
   **C04B 24/42** (2006.01)

(52) Cooperative Patent Classification (CPC):
   (C-Sets available)
   **C04B 28/14;** C04B 2111/0062; C04B 2111/27;
   C04B 2201/10                                        (Cont.)

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **KH MA MD TN**

(30) Priority:  **31.10.2022   US 202263381576 P**

(71) Applicant: **CertainTeed Gypsum, Inc.**
   **Malvern, PA 19355 (US)**

(72) Inventors:
   • **AMATO, Dahlia**
     **MALVERN, 19355 (US)**
   • **LESPIAT, Remi**
     **MALVERN, 19355 (US)**
   • **MC GINLEY, Patrick**
     **MALVERN, 19355 (US)**

(74) Representative: **Saint-Gobain Recherche**
   **Département Propriété Industrielle**
   **39 Quai Lucien Lefranc**
   **93300 Aubervilliers (FR)**

(54) **WATER-RESISTANT GYPSUM BOARDS AND METHODS FOR MAKING SAME**

(57)    The present invention related generally to a water-resistant gypsum board having a density of at least 20 lbs/ft$^3$ comprising: a gypsum core, wherein the gypsum core comprises: calcium sulfate dihydrate; a modified starch, present in an amount in the range of 0.04-0.6 lbs/ft$^3$, based on the density of the gypsum board; and a silicone oil present in an amount in the range of 0.01-0.6 lbs/ft$^3$, based on the density of the gypsum board.

EP 4 361 116 A1

(52) Cooperative Patent Classification (CPC): (Cont.)

C-Sets
**C04B 28/14, C04B 24/38, C04B 24/42,
C04B 40/0263**

**Description**

**FIELD**

The present invention relates generally to water-resistant gypsum boards and methods of making the same.

**TECHNICAL BACKGROUND**

Gypsum building products (e.g., known variously as wallboard, ceiling board, plasterboard and "drywall") are panels made of a gypsum core sandwiched between two layers of liner, often paper, on the outside surfaces of the gypsum core. They are widely used as construction materials due to their ease of fabrication, high mechanical strength, low thermal conductivity, resistance to spread of fire, and soundproofing properties. The quality of a gypsum board is strongly dependent on its gypsum core, which is fabricated by the hydration of stucco slurry (mainly containing calcium sulfate hemihydrate) into a set body of calcium sulfate dihydrate. To control the properties of gypsum boards, additives are often added to the stucco slurry during the board making process. For example, foaming agents, inorganic compounds, and other additives may be included in the slurry to modulate the density, strength, and/or fire resistance properties of the board.

To provide water-resistant gypsum boards, commonly used for constructing spaces that are exposed to high levels of moisture (e.g., bathrooms and laundry rooms), it is common to include the silicone oil polymethylhydrosiloxane (PMHS) to the gypsum slurry during the board making process. However, PMHS will often migrate to the surface of the gypsum board, providing only the surface of the board with water-resistant properties. To compensate, silicone oils are often used in larger quantities than necessary. Currently, there is a shortage of PMHS worldwide, which has caused the price of PMHS to increase, making current water-resistant gypsum board formulations cost prohibitive. As such, there is need to reduce the use of silicone oils in gypsum boards.

**SUMMARY**

In one aspect, the present invention provides a water-resistant gypsum board comprising a gypsum core having a density of at least 20 lbs/ft$^3$, the gypsum core comprising:

> a set body of calcium sulfate dihydrate;
> a modified starch, present in an amount in the range of 0.04-0.6 lbs/ft$^3$, based on the density of the gypsum board; and
> a silicone oil present in an amount in the range of 0.01-0.6 lbs/ft$^3$, based on the density of the gypsum board

wherein the set gypsum core is made by the method comprising:

> providing a slurry comprising stucco, water, a modified starch (e.g., in uncooked form) having a peak viscosity of at least 500 BU, present in an amount in the range of 0.04-0.6 lbs/ft$^3$, based on the density of the gypsum core, and a silicone oil present in an amount in the range of 0.01-0.6 lbs/ft$^3$, based on the density of the gypsum core;
> allowing the slurry to set to form a wet gypsum core; and
> drying the wet gypsum core at a temperature in the range of 50-350 °C to provide a set gypsum core.

In another aspect, the present invention provides for a method of forming a water-resistant gypsum board (e.g., a board as described herein) comprising a gypsum core having a density of at least 20 lbs/ft$^3$, the method comprising:

> providing a slurry comprising stucco, water, a modified starch having a peak viscosity of at least 500 BU, present in an amount in the range of 0.04-0.6 lbs/ft$^3$, based on the density of the gypsum core, and a silicone oil present in an amount in the range of 0.01-0.6 lbs/ft$^3$, based on the density of the gypsum core;
> allowing the slurry to set to form a wet gypsum core; and
> drying the wet gypsum core at a temperature in the range of 50-350 °C to provide a set gypsum core.

**BRIEF DESCRIPTION OF THE DRAWINGS**

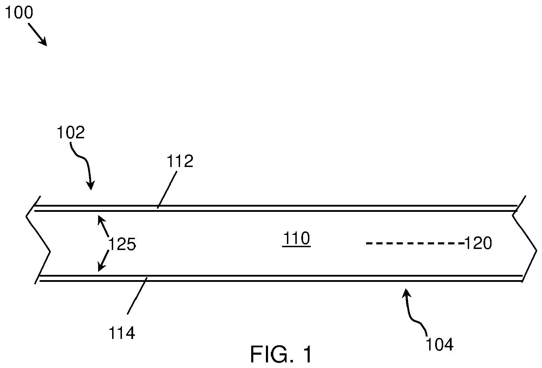

FIG. 1 is a schematic cross-sectional view of a gypsum board of the invention.

**DETAILED DESCRIPTION**

The present inventors have developed a gypsum board and method for making them that improves the efficiency of silicone oil used and the overall water-resistance properties of the board.

As described above, silicone oils are often used to provide water-resistant properties to gypsum boards. However, the present inventors have noted that the amount used is often in excess of that necessary on a per-unit-mass bases to compensate for the propensity for the oils to migrate to the board surface during the setting and drying of the gypsum core of the board, leaving the center of the gypsum core with relatively less water resistance. Additionally, the use of silicone oils in gypsum boards is becoming more expensive due to the short supply of silicone oil, especially the polymethylhydrosiloxane typically used in gypsum boards.

The present invention is concerned with improving the efficiency of silicone oil used in water-resistant gypsum boards. To that end, the present inventors have found that by including a high-viscosity modified starch together with the silicone oil in the stucco slurry for making the gypsum board, and thus in the gypsum board itself, the water resistance can be improved. Without intending to be bound by theory, the present inventors surmise that the use of the starch helps to limit the migration of the silicone oil in the gypsum core, and thus the silicone oil concentration can remain more uniform throughout. This means that the threshold concentration of silicone oil necessary for water resistance in the center of the gypsum core is reduced. As a result, efficiency of the use of the silicone oil improved, which means an improvement in the water-resistance properties of the board for a given dosage of silicone oil. According, the present inventors have advantageously found a gypsum board formulation that uses less silicone oil than conventional water-resistant boards.

In one aspect, the present invention provides for a water-resistant gypsum board comprising a gypsum core having a density of at least 20 lbs/ft$^3$. As described herein, the gypsum core comprises a set body of calcium sulfate dihydrate; a modified starch, present in an amount in the range of 0.04-6 lbs/ft$^3$, based on the density of the gypsum core; and a silicone oil present in an amount in the range of 0.01-0.6 lbs/ft$^3$, based on the density of the gypsum core.

As described above, the present inventors have found a water-resistant gypsum board formulation that improves the efficiency of use of silicone oil. The amount of silicone oil used will vary depending on the gypsum formulation and the degree of water resistance necessary; the use of the starch as described herein can improve the degree of water resistance for a given amount of silicone oil. In some embodiments, the silicone oil is present in an amount in the range of 0.1-0.6 lbs/ft$^3$ based on the density of the gypsum core. In various embodiments, the silicone oil is present in an amount in the range of 0.01-0.5 lbs/ft$^3$, based on the density of the gypsum core. For example, in various embodiments, the silicone oil is present in an amount in the range of 0.01-0.3 lbs/ft$^3$ or 0.01-0.25 lbs/ft$^3$, based on the density of the gypsum core. In various embodiments, the silicone oil is present in an amount in the range of 0.02-0.6 lbs/ft$^3$, or 0.02-0.5 lbs/ft$^3$, or 0.02-0.3 lbs/ft$^3$, or 0.02-0.25 lbs/ft$^3$, 0.05-0.6 lbs/ft$^3$, or 0.05-0.5 lbs/ft$^3$, or 0.05-0.3 lbs/ft$^3$, or 0.05-0.25 lbs/ft$^3$, or 0.1-0.6 lbs/ft$^3$, or 0.1-0.5 lbs/ft$^3$, or 0.1-0.3 lbs/ft$^3$, or 0.1-0.25 lbs/ft$^3$, or 0.2-0.6 lbs/ft$^3$, or 0.2-0.5 lbs/ft$^3$, or 0.2-0.3 lbs/ft$^3$, or 0.2-0.25 lbs/ft$^3$, based on the density of the gypsum core.

It can be advantageous that the silicone oil used can react in the slurrying, setting and drying operations, e.g., by reacting with itself to provide larger molecular weight silicones. For example, in some embodiments, the silicone oil is a hydrogen-functional silicone oil. The hydride, of the hydrogen functional silicone oil, is hydrolyzed to hydroxide, which can then react with other silicone oil molecules, stucco, or gypsum. This provides a network of silicone, which strengthens the gypsum board. Such hydrogen-functional silicone oils can be selected from any silicone oil with hydrolysable silicon hydride (Si-H) groups. For example, in some embodiments, the silicone oil is a polymethylhydrosiloxane (PMHS).

As described above, the present inventors surmise that the use of the starch helps to limit the migration of the silicone oil in the gypsum core, and thus the silicone oil concentration can remain more uniform throughout. Accordingly, in some embodiments, the silicone oil concentration in the center of the gypsum core is at least 50% of the concentration within 10% of an outer edge of the gypsum core. In some embodiments, the silicone oil concentration in the center of the gypsum core is at least 60% of the concentration within 10% of an outer edge of the gypsum core. For example, in various embodiments, the silicone oil concentration in the center of the gypsum core is at least 65%, or at least 70%, or at least 75%, of the concentration within 10% of an outer edge of the gypsum core. In some embodiments, the silicone oil concentration in the center of the gypsum core is at least 50% of the concentration at the edge of the gypsum core. In various embodiments, the silicone oil concentration in the center of the gypsum core is at least 60 %, or at least 65%, or at least 70%, or at least 75% of the concentration at the edge of the gypsum core. "Center" and "outer edge" in this regard refers to sites measured along the thickness axis of the board. The "center" of the core is indicated by the dashed line 120 in FIG. 1, and the "outer edge" of the core is indicated by arrows 125 in FIG. 1.

In various embodiments, the gypsum core includes silicone oil is present in an amount in the range of 0.01-0.6 lbs/ft$^3$. As would be understood by the skilled person, this amount is an average amount over the volume of the core, and that the concentration of the silicone oil may be different throughout layers of the core. However, as hypothesized by the present inventors, by including high-viscosity modified starches, the silicone oil concentration remains uniform throughout the core. For example, in some embodiments, the silicone oil concentration at the center of the gypsum core is at least 50% of the average amount of silicone oil present in the core. In various embodiments, the silicone oil concentration at the center of the gypsum core is at least 60%, or at least 65%, or at least 70%, or at least 75% of the average amount of the silicone oil present in the core. "Center" and "average" in this regard refers to sites measured along the thickness axis of the board.

Thus, along with the use of silicone oil, the present inventors have found it advantageous to also include a high-viscosity modified starch to in the stucco slurry that sets and dries to ultimately form the gypsum board. These modified starches have a high viscosity (e.g., at least 500 Brabender units (BU), measured as described herein) and a gel temperature that is desirably below or equal to the temperature used to dry the slurry (e.g., or no more than 100 °C). Without intending to be bound by theory, it is hypothesized that during drying of the gypsum slurry, the high viscosity modified starch gels and acts as a barrier to keep the silicone oil in place, resulting in less migration of the silicone oil to the surface of the gypsum core and thus a higher concentration of the silicone oil at the center of the gypsum core, improving the overall water resistance properties of the board.

As described above, the modified starch also has a high viscosity (e.g., a peak viscosity at least 500 BU). The present inventors have noted in the Examples below that water-resistant boards made with high-viscosity starches have higher water resistance. Without intending to being bound by theory, it is believed, that the high viscosity of the starch helps to reduce the migration of the silicone oil within the gypsum core, and as such results in a higher concentration of silicone oil in the center of the core. And indeed, as described in more details in the Examples below, the same effects are not observed with low-viscosity starches. As used herein, the peak viscosity is measured by measuring a slurry of the modified starch in water at a concentration of 15% solids with a Viscograph-E instrument set to 75 rpm and 700 cmg, where the slurry is heated from 25 °C to 95 °C at a rate of 3°C/minute, the slurry is held at 95 °C for 10 minutes, and the slurry is cooled to 50 °C at a rate of 3 °C/minute. The peak viscosity is determined as the maximum viscosity of the starch slurry measured by the above method with the Viscograph-E instrument. In various embodiments, the modified starch has a peak viscosity that is at least 500 BU, or at least 550 BU, or at least 600 BU, or at least 650 BU, or at least 700 BU, or at least 750 BU, or at least 800 BU. In some embodiments, the modified starch has a peak viscosity in the range of 500-1500 BU. For example, in various embodiments, the modified starch has a peak viscosity in the range of 500-1400 BU, or 500-1300 BU, or 500-1200 BU, or 500-1100 BU, or 500-1000 BU, or 600-1500 BU, or 600-1400 BU, or 600-1300 BU, or 600-1200 BU, or 600-1100 BU, or 700-1500 BU, or 700-1400 BU, or 700-1300 BU, or 700-1200 BU. In some embodiments, the modified starch has a peak viscosity that is at least 700 BU. In some embodiments, the modified starch has a peak viscosity in the range or 600-1500 BU.

As the person of ordinary skill in the art will appreciate, a number of starches and a number of modifications thereof can be suitable for use in the materials and processes described herein. The source of the modified starch is not particularly limited. For example, the modified starch may be a wheat starch, a tapioca starch, a corn starch, a potato starch, a pea starch or a rice starch. In various embodiments, the modified starch may be a wheat starch, a tapioca starch, or a corn starch. In some embodiments, the modified starch is a corn starch.

In various embodiments, the starch is an acid-modified starch; the person of ordinary skill in the art will appreciate that acid-modification can be used to provide the starch with a desired viscosity, with a greater degree of acid modification providing a lower viscosity. Various functionalizations can be used, e.g. hydroxyalkylation (e.g., hydroxyethylation, hydroxypropylation, hydroxybutylation); acylation (e.g., acetylation); carboxymethylation; alkylation (e.g., ethylation, butylation, or propylation); succination; oxidation. However, other suitable modifications can be determined by the person of ordinary skill in the art. For example, the starch may be cross-linked (e.g., by phosphate), although a high degree of crosslinking may not be desirable. In some embodiments, the starch is a hydroxyethylated starch. Many starches suitable for use in gypsum products are commercially available; the person of ordinary skill in the art can, based on the present disclosure, select ones that have appropriate viscosities for a desired product.

In various methods for making the boards described herein, the silicone oil and the modified starch are included in a slurry that includes stucco and water; the slurry is allowed to set to ultimately from the gypsum core, as described in more detail below. The modified starch can desirably be provided to the slurry in uncooked form. As would be understood by the skilled person, a pregelatinized starched (or a cooked starch) are often prepared by heating and extruding a slurry of starch. In doing so, the crystalline structure of the starch granules rupture, resulting in starches with lower gelatinization lower temperatures as compared to uncooked starches. Uncooked starches are not modified by heat or extrusion and retain the crystalline structure of the starch granules. Pregelatinized starches tend to thicken in cold water, while uncooked starches generally will not. Use of an uncooked modified starch in the slurry can allow for desirable processing.

The present inventors have found that by using a modified starch that is not substantially soluble in cold water, such as is the case for an uncooked modified starch, the viscosity of the slurry does not thicken substantially upon addition of the starch. Using uncooked modified starches can provide operational advantages in fluid handling; the slurry can be easily processed into a board according to conventional methods known in the art. Only after the heat generated during setting do the advantages of the uncooked starch take effect. Accordingly, in some embodiments, the uncooked modified starch has a solubility of no more than 5 wt% in 25 °C water. In some embodiments, the uncooked modified starch has a solubility of no more than 2 wt%, e.g., no more than 1 wt% in 25 °C water.

However, use of a pregelatinized starch is also within the scope of the invention. Pregelatinized modified starches are often soluble in cold water and can thicken the slurry when added. While thickening of the slurry may occur, the slurry can still be processed according to conventional methods known in the art.

Another way to quantify the desired behavior of not thickening upon addition is via measurement of cold water viscosity of the starch. For example, in various embodiments, the uncooked modified starch has a cold water viscosity of no more than 50 cP, e.g., no more than 30 cP, or no more than 10 cP, in cold water (i.e., when taken up in water at a mass ratio of 0.1:1 at a temperature of 25 °C). In some embodiments, the uncooked modified starch has a cold water viscosity of no more than 30 cP in cold water (i.e. at a temperature of 25 °C). The cold water viscosity can be measured by a Brookfield viscometer at 25 °C by adding 20 g of dry starch to 180 g of water in a Waring blender (model 31 BL92). The starch solution is mixed at low speed for 15 seconds. The starch solution is then transferred to a measuring cup and a no. 2 paddle and 60 rpm are used. The viscosity value is measured at 20 seconds is used as the cold water viscosity of the starch.

The desired maximum gel temperature of the modified starch will depend on the overall process used to make the boards, and is desirably at or below the temperature used in drying the boards. As such, in some embodiments, the modified starch has a gel temperature of no more than 100 °C. In some embodiments, the modified starch has a gel temperature of no more than 95 °C (e.g., no more than 90 °C, or 85 °C, or 80 °C, or 75 °C, or 72 °C, or 70 °C). In some embodiments, the uncooked modified starch has a gel temperature in the range of 60-100 °C. For example, in various embodiments, the modified starch as a gel temperature in the range of 60-95 °C, or 60-90 °C, or 60-85 °C, or 60-80 °C, or 60-75 °C, or 60-72 °C, or 60-70 °C, or 65-100°C, or 65-95 °C, or 60-90 °C, or 60-85 °C, or 65-80 °C, or 65-75 °C, or 65-72 °C, or 65-70 °C. In some embodiments, in the method for making the gypsum core the modified starch is uncooked when provided to the slurry and the uncooked modified starch has a gel temperature of no more than 85 °C.

As described above, in various embodiments, the gypsum core includes a modified starch in an amount in the range of 0.04-0.6 lbs/ft$^3$, based on the density of the gypsum core. In various embodiments, the modified starch is present in an amount in the range of 0.04-0.5 lbs/ft$^3$, e.g., 0.04-0.4 lbs/ft$^3$, or 0.04-0.3 lbs/ft$^3$, based on the density of the gypsum core. In various embodiments, the modified starch is present in an amount in the range of 0.05-0.6 lbs/ft$^3$, e.g., 0.05-0.5 lbs/ft$^3$, 0.05-0.4 lbs/ft$^3$, or 0.05-0.3 lbs/ft$^3$, based on the density of the gypsum core. In various embodiments, the modified starch is present in an amount in the range of 0.07-0.6 lbs/ft$^3$, e.g., 0.07-0.5 lbs/ft$^3$, 0.07-0.4 lbs/ft$^3$, or 0.07-0.3 lbs/ft$^3$, based on the density of the gypsum core. In various embodiments, the modified starch is present in an amount in the range of 0.1-0.6 lbs/ft$^3$, e.g., 0.1-0.5 lbs/ft$^3$, 0.1-0.4 lbs/ft$^3$, or 0.1-0.3 lbs/ft$^3$, based on the density of the gypsum core. In some embodiments, the modified starch is present in an amount in the range of 0.1-0.6 lbs/ft$^3$ based on the density of the gypsum core. The person of ordinary skill in the art will, based on the present disclosure, determine an appropriate amount of the starch to provide the desired water resistance, and other desirable board properties.

As described above, both a modified starch and silicone oil are present in the gypsum core of the water-resistant gypsum board. In various embodiments, the weight ratio of silicone oil to modified starch is at least 1:4, or at least 1:3.5, or at least 1:3. In various embodiments, the weight ratio of silicone oil to modified starch is at least 1:1, or at least 1.5:1, or at least 2:1. For example, in various embodiments, the weight ratio of silicone oil to modified starch is in the range of 1:4 to 3:1, or 1:4 to 2.5:1, or 1:4 to 2:1, or 1:3.5 to 3:1, or 1:3.5 to 2.5:1, or 1:3.5 to 2:1, or 1:3 to 3:1, or 1:3 to 2.5:1, or 1:3 to 2:1, or 1:1 to 3:1, or 1:1 to 2.5:1, or 1:1 to 2:1. In some embodiments, the weight ratio of silicone oil to modified starch is in the range of 1:4 to 3:1.

As described above, the present inventors surmise that the use of the starch helps to limit the migration of the silicone oil in the gypsum core. To accomplish this effect, the present inventors hypothesize that the starch concentration remains more uniform throughout the gypsum core. Accordingly, in some embodiments, the starch concentration in the center of the gypsum core is at least 50% of the concentration within 10% of an outer edge of the gypsum core. In some embodiments, the modified starch concentration in the center of the gypsum core is at least 60% of the concentration within 10% of an outer edge of the gypsum core. For example, in various embodiments, the starch concentration in the center of the gypsum core is at least 65%, or at least 70%, or at least 75%, of the concentration within 10% of an outer edge of the gypsum core. In some embodiments, the starch concentration in the center of the gypsum core is at least 50% of the concentration at the edge of the gypsum core. In various embodiments, the starch concentration in the center of the gypsum core is at least 60 %, or at least 65%, or at least 70%, or at least 75% of the concentration at the outer edge of the gypsum core. "Center" and "outer edge" in this regard refers to sites measured along the thickness axis of the board.

In various embodiments, the gypsum core includes starch present in an amount in the range of 0.04-0.6 lbs/ft$^3$. As would be understood by the skilled person, this amount is an average amount over the volume of the core, and that the concentration of the starch may be different throughout layers of the core. However, as hypothesized by the present inventors, the high-viscosity modified starches concentration remains uniform throughout the core. For example, in some embodiments, the starch concentration at the center of the gypsum core is at least 50% of the average amount of starch present in the core. In various embodiments, the starch concentration at the center of the gypsum core is at least 60%, or at least 65%, or at least 70%, or at least 75% of the average amount of the starch present in the core. "Center" and "average" in this regard refers to sites measured along the thickness axis of the board.

The present invention relates to water-resistant gypsum boards. As would be understood by the person of ordinary skill in the art, water-resistant gypsum boards have a relatively low water absorption. In various embodiments, the water-resistant gypsum board of the present invention has a Test Water Absorption (see Examples) of no more than 20 wt. %, e.g., no more than 17 wt. %, or no more than 15 wt. %, based on the weight of the board. The present invention provides for water-resistant gypsum boards having a density of at least 20 lbs/ft$^3$. The size and shape (e.g., length, width, and thickness) of the water-resistant gypsum board is not particularly limited, and the person of ordinary skill in the art would be able to choose an appropriate shape and size for the desired application. In some embodiments, the water-resistant gypsum board has a density of at least 25 lbs/ft$^3$ or at least 30 lbs/ft$^3$. In some embodiments, the water-resistant gypsum board has a density in the range of 20-80 lbs/ft$^3$. For example, in various embodiments, the water-resistant gypsum board has a density in the range of 20-70 lbs/ft$^3$, or 20-60 lbs/ft$^3$, or 25-80 lbs/ft$^3$, or 25-70 lbs/ft$^3$, or 25-60 lbs/ft$^3$, or 30-80 lbs/ft$^3$, or 30-70 lbs/ft$^3$, or 30-60 lbs/ft$^3$.

As is conventional, a variety of other components may be present in the gypsum core. For example, one or more accelerators, fluidizers, retarders, dispersants, foaming agents, and/or glass fibers maybe be present in the gypsum core. Such components may be present in a variety of amounts. For examples, the components may be present in an about of no more than 5 wt%, e.g., no more than 3 wt%, or no more than 2 wt%. Desirably, the gypsum core is at least 75 wt% gypsum, e.g., at least 80 wt% gypsum, or at least 85 wt% gypsum.

As the person of ordinary skill in the art will appreciate, gypsum boards are typically provided with liners at opposing major surfaces thereof. An example of such a gypsum board is shown cross-sectional schematic view in FIG. 1. Here, gypsum board 100 having opposing major surfaces 102 and 104 includes a gypsum core 110 disposed between liner 112 (at major surface 102) and liner 114 (at major surface 104). The liners can be formed, for example, from paper (which itself can be coated with a variety of substances, e.g., wax or silicone) or fiberglass. Of course, other liner materials are possible.

Another aspect of the present invention provides for a method of forming a water-resistant gypsum board having a gypsum core having a density of at least 20 lbs/ft$^3$. The method comprises providing a slurry comprising stucco, water, a modified starch, and a silicone oil; wherein the modified starch has a peak viscosity of at least 500 BU and is present in an amount in the range of 0.04-0.6 lbs/ft$^3$, based on the density of the gypsum core; and wherein the silicone oil is present in an amount in the range of 0.01-0.6 lbs/ft$^3$, based on the density of the gypsum core; allowing the slurry to set to form a wet gypsum core; and drying the wet gypsum core at a temperature of 50-350 °C to provide the gypsum core. With the selection of starch and silicone oil as described herein, the person of ordinary skill in the art can use conventional processes for making the gypsum boards as described herein.

As is known in the art, stucco can have a variety of compositions depending on the source and application at hand. As used herein, a "stucco" is a material having at least 75 wt% of calcium sulfate hemihydrate. It is typically provided by calcining gypsum to convert the dihydrate of gypsum to hemihydrate. Real-world samples of stucco typically include, together with the hemihydrate (e.g., present as α-calcium sulfate hemihydrate, β-calcium sulfate hemihydrate, or combinations thereof), one or more of calcium sulfate dihydrate, calcium sulfate anhydrate, and inert calcium sulfate.

As described above, the method of the present invention includes providing a slurry that comprises stucco and water. As the person of ordinary skill in the art will appreciate, the water provides fluidity to the slurry for ease of handling, as well as provides the necessary water for hydration of the hemihydrate to gypsum. The person of ordinary skill in the art will select a desirable ratio of stucco to water. In various embodiments, the weight ratio of stucco to water in the slurry is no more than 3:1, or no more than 5:2, or no more than 2:1, or no more than 7:4, or no more than 3:2. For example, in various embodiments, the weight ratio of stucco to water is in the range of 3:1 to 1:2, or 2:1 to 4:7, or 3:1 to 2:3, or 3:1 to 1:1, or 5:2 to 1:2, or 5:2 to 4:7, or 5:2 to 2:3, or 5:2 to 1:1, or 2:1 to 1:2, or 2:1 to 4:7, or 2:1 to 2:3, or 2:1 to 1:1, or 7:4 to 1:2, or 7:4 to 4:7, or 7:4 to 2:3, or 7:1 to 1:1, or 3:2 to 1:2, or 3:2 to 4:7, or 3:2 to 2:3, or 3:2 to 1:1.

Even if the board made by the methods described herein does not meet all the limitations of the boards as described above, the methods described herein can be advantaged by many of the particular parameters described above.

For example, the stucco is desirably present in the slurry to provide the set and a gypsum core with at least 75 wt% gypsum, e.g., at least 80 wt% gypsum, or at least 85 wt% gypsum.

The silicone oil can be as described in any embodiment described above with respect to the gypsum boards of the invention. The person of ordinary skill in the art can provide silicon oil in the slurry in an amount sufficient to provide a total amount of silicone oil in the gypsum core as described above with respect to any of the gypsum board embodiments.

The modified starch can be as described in any embodiment described above with respect to the gypsum boards of the invention. The person of ordinary skill in the art can provide modified starch in the slurry in an amount sufficient to provide a total amount of modified starch in the gypsum core as described above with respect to any of the gypsum board embodiments.

Moreover, any of the weight ratio of silicone oil to modified starch in the slurry; the water absorption of the board made by the method; the board density; and the overall board structure can be as described in any embodiment above.

While not discussed in detail here, other additives may be present in the slurry. For example, one or more accelerators, fluidizers, retarders, dispersants, foaming agents, and/or glass fibers maybe be present in the slurry.

As noted above, either pregelatinized or uncooked starch maybe used in the slurry. However, in various desirable embodiments the starch does not immediately gel when included in the slurry, such that use of the starch does not substantially increase the viscosity of the slurry. In such embodiments, it can be desirable to use an uncooked starch.

To approximate the overall viscosity of the slurry, a slump size is measured. For example, in various embodiments, the slurry has a slump size (measured as described in the Examples) in the range of 6 to 15 inches, e.g., 6 to 12 inches, or 8 to 20 inches, or 8 to 15 inches, or 9 to 12 inches.

The person of ordinary skill in the art can use conventional methods to form the slurry into a board. For example, the slurry can be dispensed between opposing liners, allowed to set, then dried.

While either pregelatinized or uncooked starched may be used, the present inventors note that it can be desirable for the starch to gel only after the slurry is dispensed. As such, it is advantageous to use an uncooked modified starch that has a gel temperature of below or equal to the temperature used to dry the slurry. As such, in some embodiments, drying occurs at a temperature in the range of 50-350 °C to provide the set gypsum core. In some embodiments, drying occurs at a temperature in the range of 50-325 °C or 50-300 °C (i.e., measured in the environment above the board during drying, e.g., in a drying oven). For example, in various embodiments, drying occurs at a temperature in the range of 100-350 °C, or 100-325 °C , or 100-300 °C, or 150-350 °C, or 150-325 °C , or 150-300 °C, or 200-350 °C, or 200-325 °C , or 200-300 °C. Drying may be accomplished with an oven, wherein the oven temperature is in the range of 50-350 °C, or 50-325 °C, or 50-300°C, or 100-350 °C, or 100-325 °C , or 100-300 °C, or 150-350 °C, or 150-325 °C , or 150-300 °C, or 200-350 °C, or 200-325 °C , or 200-300 °C. During the drying step, the temperature of the gypsum core does not exceed 125 °C, e.g., does not exceed 120 °C, 115 °C, 110 °C, or 105 °C.

**EXAMPLES**

The Examples that follow are illustrative of specific embodiments of the product and/or process of the invention, and various uses thereof. They are set forth for explanatory purposes only, and are not to be taken as limiting the scope of the invention.

Example 1. Impact of Starch Viscosity on Water Resistance of Gypsum Board

To determine how the inclusion of starch to water-resistant gypsum board influences the water resistant boards, three starches with different viscosities were added to gypsum slurries including a silicone oil. The gypsum slurries were made using a ratio of gypsum to water of 1.35, based on weight. The three starches used include Supercore® S23F (acid-modified corn starch from Grain Processing Corporation), Clinton 240 (acid-modified corn starch from Archer Daniels Midland), and Ethylex® 2075 (a hydroxyethylated corn starch from Primary Products Ingredients Americas LLC) and the silicone oil used was BS94 polymethylhydrosiloxane (from Wacker).

The gypsum slurries where then measured for their slump size. To do so, after mixing the slurry, a portion was poured into a 2" diameter x 4" height cylinder sitting on the center of a 12" x 12" glass plate; filling the cylinder to the brim. A knife was used to remove any extra slurry to ensure that the cylinder was not overflowing. Immediately after filling the cylinder, the cylinder was lifted straight up, perpendicular to the plate. Once the slurry had stiffened (such that a knife can cleanly cut through the slurry), four diameters of the slurry was measured, averaged, and recorded as the slump size. The target slump size is 9 ± 0.5 inches. Slump sizes as described throughout the disclosure are measured as described here.

The gypsum slurries were also formed into a board samples with paper liners disposed on both the top and bottom of the board. The board samples were prepared in 7" x 7" squares. Table 1 provides the formulations of the board samples tested and the slump size of the slurries.

Table 1.

| | Sample No. | | | | | |
|---|---|---|---|---|---|---|
| | 1 | 2 | 3 | 4 | 5 | 6 |
| Board Weight (lbs/msf) | 2299 | 2247 | 2283 | 2248 | 2267 | 2262 |
| Board Density (lbs/ft$^3$) | 55.18 | 53.93 | 54.79 | 53.95 | 54.41 | 54.29 |
| Slump Size (in.) | 9 | 9 | 9 | 9 | 9 | 9 |
| Starch | S23F | Clinton 240 | Ethylex 2075 | S23F | Clinton 240 | Ethylex 2075 |
| Starch Gel Temp. (°C) | 73.7 | 71.4 | 62.9 | 73.7 | 71.4 | 62.9 |
| Starch Viscosity (BU) | 76 | 728 | 1156 | 76 | 728 | 1156 |

(continued)

| | Sample No. | | | | | |
|---|---|---|---|---|---|---|
| | 1 | 2 | 3 | 4 | 5 | 6 |
| Amount of Starch (lbs/msf) | 12 | 12 | 12 | 6 | 6 | 6 |
| Amount of Starch (lbs/ft$^3$) | 0.288 | 0.288 | 0.288 | 0.144 | 0.144 | 0.144 |
| Amount of silicone oil (lbs/msf) | 10 | 10 | 10 | 10 | 10 | 10 |
| Amount of silicone oil (lbs/ft$^3$) | 0.24 | 0.24 | 0.24 | 0.24 | 0.24 | 0.24 |

The gypsum board samples were then tested for their water absorption. The sample tested for water absorption was 3.8" x 3.8" cut from the center of the board sample. Water absorptions measured in this fashion are "Test Water Absorptions" for the purposes of this invention. To do so, the gypsum board samples were first weighed. Then, they were placed on glass rods on a support in a water bath with a head of 1 inches of water over the top of the sample. The glass rods provide a gap of 6 mm between the sample and the support, allowing all sides of the sample to be exposed wot water. Glass rods were placed on top of the sample to keep the sample in contact with the support under the 1 inch of water. The samples were kept under water for 2 hours. Excess water was wiped from the surfaces and edges of the sample and then weighed. The Test Water Absorption was calculated based on the following equation:

$$\text{Test Water Absorption (\%)} = ((\text{Mass}_{2hours} - \text{Mass}_{initial})/ \text{Mass}_{initial}) \times 100$$

Table 2 reports the Test Water Absorption for each sample tested as described above.

Table 2.

| Sample No. | Test Water Absorption (%) |
|---|---|
| 1 | 15.2 |
| 2 | 14.6 |
| 3 | 14 |
| 4 | 17 |
| 5 | 14 |
| 6 | 13 |

From Tables 1 and 2, the gypsum board samples that included starches with higher viscosity starches (e.g., higher than 500 BU) had lower Test Water Absorption and better moisture resistance. Indeed, when comparing Sample 4 with Sample 5, an approximately 18% improvement in Total Water Absorption is observed. Sample 6 showed the lowest Test Water Absorption, and when compared to Sample 4, an improvement of approximately 23% is observed.

Example 2. Reduction of Silicone Oil

Three gypsum board samples were prepared as described in Example 1. The boards included three starches with different viscosities as well as silicone oil in varying amounts. The silicone oil used was polymethylhydrosiloxane. The gypsum slurries were made using a ratio of gypsum to water of 1.35, based on weight. Table 3 describes the formulation of the gypsum board samples. The finished board samples where then tested for their Test Water Absorption, as described in Example 1.

Table 3.

| | Sample No. | | |
|---|---|---|---|
| | 7 | 8 | 9 |
| Board Weight (lbs/msf) | 2291 | 2258 | 2261 |

(continued)

|  | Sample No. | | |
|---|---|---|---|
|  | 7 | 8 | 9 |
| Board Density (lbs/ft$^3$) | 54.98 | 54.19 | 54.26 |
| Slump Size (in.) | 9 | 9 | 9 |
| Starch | S23F | Clinton 240 | Ethylex 2075 |
| Starch Gel Temp. (°C) | 73.7 | 71.4 | 62.9 |
| Starch Viscosity (BU) | 76 | 728 | 1156 |
| Amount of Starch (lbs/msf) | 6 | 6 | 6 |
| Amount of Starch (lbs/ft$^3$) | 0.144 | 0.144 | 0.144 |
| Amount of silicone oil (lbs/msf) | 12 | 10 | 10 |
| Amount of silicone oil (lbs/ft$^3$) | 0.288 | 0.24 | 0.24 |

Table 4 reports the Test Water Absorption for each sample tested as described above.

Table 4.

| Sample No. | Test Water Absorption (%) |
|---|---|
| 7 | 15.21 |
| 8 | 13.91 |
| 9 | 12.96 |

From Tables 3 and 4, the gypsum board samples that included starches with higher viscosity starches (e.g., higher than 500 BU) had lower Total Water Absorption and better moisture resistance, despite also having less silicone oil present. Indeed, when comparing Sample 7 with Sample 8, an approximately 8% improvement in Test Water Absorption is observed. Sample 9 showed the lowest Test Water Absorption, and when compared to Sample 7, an improvement of approximately 15% is observed.

Additional aspects and embodiments of the invention are provided by the following enumerated embodiments, which may be combined in any number and in any combination that is not technically or logically inconsistent.

Embodiment 1. A water-resistant gypsum board comprising a set gypsum core having a density of at least 20 lbs/ft$^3$, wherein the set gypsum core comprises:

a set body of calcium sulfate dihydrate;
a modified starch present in an amount in the range of 0.04-0.6 lbs/ft$^3$, based on the density of the gypsum core; and
a silicone oil present in an amount in the range of 0.01-0.6 lbs/ft$^3$, based on the density of the gypsum core

wherein the set gypsum core is made by the method comprising:

providing a slurry comprising stucco, water, a modified starch having a peak viscosity of at least 500 BU, present in an amount in the range of 0.04-0.6 lbs/ft$^3$, based on the density of the gypsum core, and a silicone oil present in an amount in the range of 0.01-0.6 lbs/ft$^3$, based on the density of the gypsum core;
allowing the slurry to set to form a wet gypsum core; and
drying the wet gypsum core at a temperature in the range of 50-350 °C to provide a set gypsum core.

Embodiment 2. The water-resistant gypsum board Embodiment 1, wherein the silicone oil is present an amount in the range of 0.01-0.5 lbs/ft$^3$ (e.g., in the range of 0.01-0.3 lbs/ft$^3$, or 0.01-0.25 lbs/ft$^3$) based on the density of the gypsum core.

Embodiment 3. The water-resistant gypsum board of Embodiment 1 or Embodiment 2, wherein the silicone oil is present in an amount in the range of 0.05-0.6 lbs/ft$^3$ (e.g., in the range of 0.05-0.5 lbs/ft$^3$, or 0.05-0.3 lbs/ft$^3$, or 0.05-0.25 lbs/ft$^3$) based on the density of the gypsum core.

Embodiment 4. The water-resistant gypsum board of Embodiment 1 or Embodiment 2, wherein the silicone oil is present in an amount in the range of 0.1-0.6 lbs/ft$^3$ (e.g., in the range of 0.1-0.5 lbs/ft$^3$, or 0.1-0.3 lbs/ft$^3$, or 0.1-0.25 lbs/ft$^3$) based on the density of the gypsum core.

Embodiment 5. The water-resistant gypsum board of Embodiment 1 or Embodiment 2, wherein the silicone oil is present in an amount in the range of 0.2-0.6 lbs/ft$^3$ (e.g., in the range of 0.2-0.5 lbs/ft$^3$, or 0.2-0.3 lbs/ft$^3$, or 0.2-0.25 lbs/ft$^3$) based on the density of the gypsum core.

Embodiment 6. The water-resistant gypsum board of any of Embodiments 1-5, wherein the silicone oil is a hydrogen-functional silicone.

Embodiment 7. The water-resistant gypsum board of Embodiment 6, wherein the silicone oil is a polymethylhydrosiloxane.

Embodiment 8. The water-resistant gypsum board of any of Embodiments 1-7, wherein the silicone oil concentration in the center of the gypsum core is at least 50% of the concentration within 10% of an outer edge of the gypsum core.

Embodiment 9. The water-resistant gypsum board of any of Embodiments 1-8, wherein the silicone oil concentration in the center of the gypsum core is at least 60% (e.g., at least 65%, or 70%, or 75%) of the concentration within 10% of an outer edge of the gypsum core.

Embodiment 10. The water-resistant gypsum board of any of Embodiments 1-9, wherein the silicone oil concentration in the center of the gypsum core is at least 50% of the concentration at the edge of the gypsum core.

Embodiment 11. The water-resistant gypsum board of any of Embodiments 1-10, wherein the silicone oil concentration in the center of the gypsum core is at least 60% (e.g., at least 65%, or 70%, or 75%) of the concentration at the edge of the gypsum core.

Embodiment 12. The water-resistant gypsum board of any of Embodiments 1-11, wherein the silicone oil concentration at the center of the gypsum core is at least 50% of the average amount of silicone oil present in the core.

Embodiment 13. The water-resistant gypsum board of any of Embodiments 1-12, wherein the silicone oil concentration at the center of the gypsum core is at least 60% (e.g., at least 65%, or 70%, or 75%) of the average amount of the silicone oil present in the core.

Embodiment 14. The water-resistant gypsum board of any of Embodiments 1-13, wherein the modified starch has a peak viscosity that is at least 500 BU (e.g., at least 550BU, or at least 650 BU, or at least 700 BU, or at least 750 BU, or at least 800 BU).

Embodiment 15. The water-resistant gypsum board of any of Embodiments 1-13, wherein the modified starch has a peak viscosity in the range or 500-1500 BU (e.g., in the range of 500-1400 BU, or 500-1300 BU, or 500-1200 BU, or 500-1100 BU, or 500-1000 BU).

Embodiment 16. The water-resistant gypsum board of any of Embodiments 1-13, wherein the modified starch has a peak viscosity in the range or 600-1500 BU (e.g., in the range of 600-1400 BU, or 600-1300 BU, or 600-1200 BU, or 600-1100 BU).

Embodiment 17. The water-resistant gypsum board of any of Embodiments 1-13, wherein the modified starch has a peak viscosity in the range or 700-1500 BU (e.g., in the range of 700-1400 BU, or 700-1300 BU, or 700-1200 BU).

Embodiment 18. The water-resistant gypsum board of any of Embodiments 1-17, wherein the modified starch is a corn starch.

Embodiment 19. The water-resistant gypsum board of any of Embodiments 1-17, wherein the modified starch is a wheat starch, a tapioca starch, a potato starch, a pea starch or a rice starch.

Embodiment 20. The water-resistant gypsum board of any of Embodiments 1-19, wherein the modified starch is an acid-modified starch.

Embodiment 21. The water-resistant gypsum board of any of Embodiments 1-20, wherein the modified starch is a functionalized starch.

Embodiment 22. The water-resistant gypsum board of any of Embodiments 1-21, wherein the modified starch is a hydroxyalkylated starch (e.g., hydroxyethylated, hydroxypropylated, hydroxybutylated).

Embodiment 23. The water-resistant gypsum board of any of Embodiments 1-21, wherein the modified starch is a hydroxyethylated starch.

Embodiment 24. The water-resistant gypsum board of any of Embodiments 1-23, wherein the modified starch is an acylated starch (e.g., an acetylated starch); a carboxymethylated starch; a succinated starch; and/or an oxidized starch.

Embodiment 25. The water-resistant gypsum board of any of Embodiments 1-24, wherein the modified starch concentration in the center of the gypsum core is at least 50% of the concentration within 10% of an outer edge of the gypsum core.

Embodiment 26. The water-resistant gypsum board of any of Embodiments 1-25, wherein the modified starch concentration in the center of the gypsum core is at least 60% (e.g., at least 65%, or 70%, or 75%) of the concentration within 10% of an outer edge of the gypsum core.

Embodiment 27. The water-resistant gypsum board of any of Embodiments 1-26, wherein the modified starch concentration in the center of the gypsum core is at least 50% of the concentration at the edge of the gypsum core.

Embodiment 28. The water-resistant gypsum board of any of Embodiments 1-27, wherein the modified starch concentration in the center of the gypsum core is at least 60% (e.g., at least 65%, or 70%, or 75%) of the concentration at the edge of the gypsum core.

Embodiment 29. The water-resistant gypsum board of any of Embodiments 1-28, wherein the modified starch concentration at the center of the gypsum core is at least 50% of the average amount of modified starch present in the core.

Embodiment 30. The water-resistant gypsum board of any of Embodiments 1-29, wherein the modified starch concentration at the center of the gypsum core is at least 60% (e.g., at least 65%, or 70%, or 75%) of the average amount of the modified starch present in the core.

Embodiment 31. The water-resistant gypsum board of any of Embodiments 1-30, wherein the modified starch is a pregelatinized modified starch.

Embodiment 32. The water-resistant gypsum board of any of Embodiments 1-30, wherein the modified starch is uncooked when provided to the slurry.

Embodiment 33. The water-resistant gypsum board of Embodiment 32, wherein the uncooked modified starch has a gel temperature of no more than 100 °C (e.g., no more than 95 °C , or 90 °C, or 85 °C, or 80 °C , or 75 °C, or 72 °C, or 70 °C).

Embodiment 34. The water-resistant gypsum board of Embodiment 32 or Embodiment 33, wherein the modified starch has a gel temperature in the range of 60-100°C (e.g., in the range of 60-95 °C, or 60-90 °C, or 60-85 °C, or 60-80 °C, or 60-75 °C, or 60-72 °C, or 60-70 °C, or 65-100°C, or 65-95 °C, or 60-90 °C, or 60-85 °C, or 65-80 °C, or 65-75 °C, or 65-72 °C, or 65-70 °C).

Embodiment 35. The water-resistant gypsum board of any of Embodiments 32-34, wherein the uncooked modified starch has a solubility of no more than 5 wt% in 25 °C water.

Embodiment 36. The water-resistant gypsum board of any of Embodiments 32-34, wherein the uncooked modified starch solubility of no more than 2 wt%, e.g., no more than 1 wt% of 25 °C water.

Embodiment 37. The water-resistant gypsum board of any of Embodiments 32-36, wherein the uncooked modified starch has a cold water viscosity of no more than 50 cP (e.g., no more than 30 cP, or no more than 10 cP) in cold water (i.e. at a temperature of 25 °C).

Embodiment 38. The water-resistant gypsum board of any of Embodiments 32-37, wherein the modified starch is present in an amount in the range of 0.04-0.5 lbs/ft$^3$ (e.g., in the range of 0.04-0.4 lbs/ft$^3$, or 0.04-0.3 lbs/ft$^3$) based on the density of the gypsum board.

Embodiment 39. The water-resistant gypsum board of any of Embodiments 32-37, wherein the modified starch is present in an amount in the range of 0.07-0.6 lbs/ft$^3$ (e.g., in the range of 0.07-0.5 lbs/ft$^3$, 0.07-0.4 lbs/ft$^3$, or 0.07-0.3 lbs/ft$^3$) based on the density of the gypsum board.

Embodiment 40. The water-resistant gypsum board of any of Embodiments 32-37, wherein the modified starch is present in an amount in the range of 0.1-0.6 lbs/ft$^3$ (e.g., in the range of 0.1-0.5 lbs/ft$^3$, 0.1-0.4 lbs/ft$^3$, or 0.1-0.3 lbs/ft$^3$) based on the density of the gypsum board.

Embodiment 41. The water-resistant gypsum board of any of Embodiments 1-40, wherein the weight ratio of silicone oil to modified starch is at least 1:4 (e.g., at least 1:3.5, or at least 1:3).

Embodiment 42. The water-resistant gypsum board of any of Embodiments 1-41, wherein the weight ratio of silicone oil to modified starch is at least 1:1 (e.g., at least 1.5:1, or 2:1).

Embodiment 43. The water-resistant gypsum board of any of Embodiments 1-42, wherein the weight ratio of silicone oil to modified starch is in the range of 1:4 to 3:1 (e.g., 1:4 to 3:1, or 1:4 to 2.5:1, or 1:4 to 2:1, or 1:3.5 to 3:1, or 1:3.5 to 2.5:1, or 1:3.5 to 2:1, or 1:3 to 3:1, or 1:3 to 2.5:1, or 1:3 to 2:1, or 1:1 to 2.5:1, or 1:1 to 2:1).

Embodiment 44. The water-resistant gypsum board of any of Embodiments 1-43 having a Test Water Absorption (see Examples) of no more than 20 wt. %, e.g., no more than 17 wt. %, or no more than 15 wt. %, based on the weight of the board.

Embodiment 45. The water-resistant gypsum board of any of Embodiments 1-44 having a density of at least 25 lbs/ft$^3$ (e.g., at least 30 lbs/ft$^3$).

Embodiment 46. The water resistant gypsum board of any of Embodiments 1-44 having a density in the range of 20-80 lbs/ft$^3$ (e.g., in the range 20-70 lbs/ft$^3$, or 20-60 lbs/ft$^3$), or 25-80 lbs/ft$^3$ (e.g., in the range of 25-70 lbs/ft$^3$, or 25-60 lbs/ft$^3$), or 30-80 lbs/ft$^3$ (e.g., in the range of 30-70 lbs/ft$^3$, or 30-60 lbs/ft$^3$).

Embodiment 47. The water-resistant gypsum board of any of Embodiments 1-44, wherein the gypsum core is disposed between a first liner at a first major surface of the gypsum board and a second liner at a second, opposing major surface of the board.

Embodiment 48. The water-resistant gypsum board of Embodiment 47, wherein the liners are paper liners.

Embodiment 49. A method of forming a water-resistant gypsum board comprising a gypsum core having a density of at least 20 lbs/ft$^3$ (e.g., a board of any of Embodiments 1-48), the method comprising:

> providing a slurry comprising stucco, water, a modified starch (e.g., uncooked) having a peak viscosity of at least 500 BU, present in an amount in the range of 0.04-0.6 lbs/ft$^3$, based on the density of the gypsum core, and a silicone oil present in an amount in the range of 0.01-0.6 lbs/ft$^3$, based on the density of the gypsum core; allowing the slurry to set to form a wet gypsum core; and drying the wet gypsum core at a temperature in the range of 50-350 °C to provide a set gypsum core.

Embodiment 50. The method of Embodiment 49, wherein the weight ratio of stucco to water is no more than 2:1 (e.g., no more than 7:4, or no more than 3:2).

Embodiment 51. The method of Embodiment 49, wherein the weight ratio of stucco to water is in the range of 2:1 to 1:2 (e.g., in the range of 2:1 to 4:7 , or 2:1 to 2:3, or 2:1 to 1:1 , or 7:4 to 1:2 , or 7:4 to 4:7, or 7:4 to 2:3, or 7:1 to 1:1, or 3:2 to 1:2 , or 3:2 to 4:7 , or 3:2 to 2:3, or 3:2 to 1:1).

Embodiment 52. The method of Embodiment 49, wherein stucco is present in the slurry to provide the set and dried gypsum core with at least 75 wt. % gypsum, e.g., at least 80 wt% gypsum or at least 85 wt% gypsum.

Embodiment 53. The method of any of Embodiments 49-52, wherein the amount of silicone oil present in the slurry provides silicone oil in the set and dried gypsum core in an amount as described in any of Embodiments 2-5 or Embodiments 8-13.

Embodiment 54. The method of any of Embodiments 49-53, wherein the silicone oil is as described in any of Embodiments 6 and 7.

Embodiment 55. The method of any of Embodiments 49-54, wherein the modified starch is as described in any of Embodiments 14-37.

Embodiment 56. The method of any of Embodiments 49-55, wherein the amount of modified starch present in the slurry is sufficient to provide starch in the set and dried gypsum core in an amount as described in any of Embodiments 38-40.

Embodiment 57. The method of any of Embodiments 49-56, wherein the weight ratio of silicone oil to modified starch in the slurry is as described in any of Embodiments 41-43.

Embodiment 58. The method of any of Embodiments 49-57, wherein the gypsum board has a water absorption as described in Embodiment 44.

Embodiment 59. The method of any of Embodiments 49-58, wherein the board has a density as described in Embodiment 45 or Embodiment 46, or a structure as described in Embodiment 47 or Embodiment 48.

Embodiment 60. The method of forming a water-resistant gypsum board of any of Embodiments 49-59, wherein the slurry has a slump size in the range of 6 to 20 inches (e.g., in the range of 6 to 15 inches, or 6 to 12 inches, or 8 to 20 inches, or 8 to 15 inches, or 8 to 12 inches).

Embodiment 61. The method of forming a water-resistant gypsum board of any of Embodiments 49-60, wherein the drying occurs at a temperature in the range of 50-325 °C (e.g., in the range of 50-300 °C).

Embodiment 62. The method of forming a water-resistant gypsum board of any of Embodiments 49-60, wherein the drying occurs at a temperature in the range of 100-350 °C (e.g., in the range of 100-325 °C , or 100-300 °C).

Embodiment 63. The method of forming a water-resistant gypsum board of any of Embodiments 49-60, wherein the drying occurs at a temperature in the range of 150-350 °C (e.g., in the range of 150-325 °C , or 150-300 °C).

Embodiment 64. The method of forming a water-resistant gypsum board of any of Embodiments 49-60, wherein the drying occurs at a temperature in the range of 200-350 °C (e.g., in the range of 200-325 °C , or 200-300 °C).

The particulars shown herein are by way of example and for purposes of illustrative discussion of the preferred embodiments of the present invention only and are presented in the cause of providing what is believed to be the most useful and readily understood description of the principles and conceptual aspects of various embodiments of the invention. In this regard, no attempt is made to show structural details of the invention in more detail than is necessary for the fundamental understanding of the invention, the description taken with the drawings and/or examples making apparent to those skilled in the art how the several forms of the invention may be embodied in practice. Thus, before the disclosed processes and devices are described, it is to be understood that the aspects described herein are not limited to specific embodiments, apparatuses, or configurations, and as such can, of course, vary. It is also to be understood that the terminology used herein is for the purpose of describing particular aspects only and, unless specifically defined herein, is not intended to be limiting.

The terms "a," "an," "the" and similar referents used in the context of describing the invention (especially in the context of the following claims) are to be construed to cover both the singular and the plural, unless otherwise indicated herein or clearly contradicted by context. Recitation of ranges of values herein is merely intended to serve as a shorthand method of referring individually to each separate value falling within the range. Unless otherwise indicated herein, each individual value is incorporated into the specification as if it were individually recited herein. It will be further understood that the endpoints of each of the ranges are significant both in relation to the other endpoint, and independently of the other endpoint.

All methods described herein can be performed in any suitable order of steps unless otherwise indicated herein or otherwise clearly contradicted by context. The use of any and all examples, or exemplary language (e.g., "such as") provided herein is intended merely to better illuminate the invention and does not pose a limitation on the scope of the invention otherwise claimed. No language in the specification should be construed as indicating any non-claimed element essential to the practice of the invention.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to". Words using the singular or plural number also include the plural and singular number, respectively. Additionally, the words "herein," "above," and "below" and words of similar import, when used in this application, shall refer to this application as a whole and not to any particular portions of the application.

As will be understood by one of ordinary skill in the art, each embodiment disclosed herein can comprise, consist essentially of or consist of its particular stated element, step, ingredient or component. As used herein, the transition term "comprise" or "comprises" means includes, but is not limited to, and allows for the inclusion of unspecified elements, steps, ingredients, or components, even in major amounts. The transitional phrase "consisting of" excludes any element, step, ingredient or component not specified. The transition phrase "consisting essentially of" limits the scope of the embodiment to the specified elements, steps, ingredients or components and to those that do not materially affect the embodiment.

Unless indicated to the contrary, the numerical parameters set forth in the specification and attached claims are approximations that may vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements.

Groupings of alternative elements or embodiments of the invention disclosed herein are not to be construed as limitations. Each group member may be referred to and claimed individually or in any combination with other members of the group or other elements found herein. It is anticipated that one or more members of a group may be included in, or deleted from, a group for reasons of convenience and/or patentability. When any such inclusion or deletion occurs, the specification is deemed to contain the group as modified thus fulfilling the written description of all Markush groups used in the appended claims.

Some embodiments of this invention are described herein, including the best mode known to the inventors for carrying out the invention. Of course, variations on these described embodiments will become apparent to those of ordinary skill in the art upon reading the foregoing description. The inventor expects skilled artisans to employ such variations as appropriate, and the inventors intend for the invention to be practiced otherwise than specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

Furthermore, it is to be understood that the embodiments of the invention disclosed herein are illustrative of the principles of the present invention. Other modifications that may be employed are within the scope of the invention. Thus, by way of example, but not of limitation, alternative configurations of the present invention may be utilized in accordance with the teachings herein. Accordingly, the present invention is not limited to that precisely as shown and described.

**Claims**

1. A water-resistant gypsum board comprising a set gypsum core having a density of at least 20 lbs/ft$^3$, wherein the set gypsum core comprises:

a set body of calcium sulfate dihydrate;
a modified starch present in an amount in the range of 0.04-0.6 lbs/ft$^3$, based on the density of the gypsum core; and
a silicone oil present in an amount in the range of 0.01-0.6 lbs/ft$^3$, based on the density of the gypsum core

wherein the set gypsum core is made by a method comprising:

providing a slurry comprising stucco, water, a modified starch having a peak viscosity of at least 500 BU, present in an amount in the range of 0.04-0.6 lbs/ft$^3$, based on the density of the gypsum core, and a silicone oil present in an amount in the range of 0.01-0.6 lbs/ft$^3$, based on the density of the gypsum core;
allowing the slurry to set to form a wet gypsum core; and
drying the wet gypsum core at a temperature in the range of 50-350 °C to provide a set gypsum core.

2. The water-resistant gypsum board of claim 1 wherein the silicone oil is present in an amount in the range of 0.1-0.6 lbs/ft$^3$ based on the density of the gypsum core.

3. The water-resistant gypsum board of claim 1 or claim 2, wherein the silicone oil is a polymethylhydrosiloxane.

4. The water-resistant gypsum board of any of claims 1-3, wherein the silicone oil concentration in the center of the gypsum core is at least 60% of the concentration within 10% of an outer edge of the gypsum core.

5. The water-resistant gypsum board of any of claims 1-4, wherein the modified starch has a peak viscosity that is at least 700 BU.

6. The water-resistant gypsum board of any of claims 1-5, wherein the modified starch has a peak viscosity in the range or 600-1500 BU.

7. The water-resistant gypsum board of any of claims 1-6, wherein the modified starch is an acid-modified starch or a hydroxyalkylated starch.

8. The water-resistant gypsum board of any of claims 1-7, wherein the modified starch concentration in the center of the gypsum core is at least 60% of the concentration within 10% of an outer edge of the gypsum core.

9. The water-resistant gypsum board of any of claims 1-8, wherein in the method for making the gypsum core the modified starch is uncooked when provided to the slurry and the uncooked modified starch has a gel temperature of no more than 85 °C.

10. The water-resistant gypsum board of claim 9, wherein the uncooked modified starch solubility of no more than 2 wt%, e.g., no more than 1 wt% of 25 °C water.

11. The water-resistant gypsum board of claim 9 or claim 10, wherein the uncooked modified starch has a cold water viscosity of no more than 30 cP in cold water (i.e. at a temperature of 25 °C).

12. The water-resistant gypsum board of any of claims 9-11, wherein the modified starch is present in an amount in the range of 0.1-0.6 lbs/ft$^3$ based on the density of the gypsum core.

13. The water-resistant gypsum board of any of claims 1-12, wherein the weight ratio of silicone oil to modified starch is in the range of 1:4 to 3:1.

14. The water-resistant gypsum board of any of claims 1-13 having a Test Water Absorption of no more than 17 wt. %, based on the weight of the board.

15. A method of forming a water-resistant gypsum board comprising a gypsum core having a density of at least 20 lbs/ft$^3$, preferably a board of any of claims 1-14, the method comprising:

providing a slurry comprising stucco, water, a modified starch, for instance uncooked, having a peak viscosity of at least 500 BU, present in an amount in the range of 0.04-0.6 lbs/ft$^3$, based on the density of the gypsum core, and a silicone oil present in an amount in the range of 0.01-0.6 lbs/ft$^3$, based on the density of the gypsum core;
allowing the slurry to set to form a wet gypsum core; and
drying the wet gypsum core at a temperature in the range of 50-350 °C to provide a set gypsum core.

100

102

112

125

110

120

114

104

FIG. 1

Europäisches
Patentamt
European
Patent Office
Office européen
des brevets

# EUROPEAN SEARCH REPORT

**Application Number**

EP 23 15 2810

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/023614 A1 (SANG YIJUN [US] ET AL) 24 January 2019 (2019-01-24) * paragraphs [0008], [0018], [0030], [0031], [0049], [0050], [0053], [0065] – [0070], [0081]; claims 1,3,4,11,12,13; figures; example 1; tables 2-4 * | 1-15 | INV. C04B28/14 C04B24/38 C04B24/42 |
| X | WO 2017/140784 A1 (ETEX BUILDING PERFORMANCE INT SAS [FR]) 24 August 2017 (2017-08-24) * page 20, lines 1-12; claims 1,5,8,12,13; examples; table 1 * * page 5, lines 21-27 * * page 18, lines 8-20 * * page 25, lines 4-9 * | 1-15 | |
| A | CN 110 759 693 A (BEIJING NEW BUILDING MAT PLC) 7 February 2020 (2020-02-07) * claims 1-4 * | 1-15 | |

**TECHNICAL FIELDS SEARCHED (IPC)**

C04B

The present search report has been drawn up for all claims

| Place of search | Date of completion of the search | Examiner |
|---|---|---|
| The Hague | 16 August 2023 | Baldé, Kaisa |

## ANNEX TO THE EUROPEAN SEARCH REPORT
## ON EUROPEAN PATENT APPLICATION NO.

EP 23 15 2810

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2023

| Patent document cited in search report | Publication date | Patent family member(s) | Publication date |
|---|---|---|---|
| US 2019023614 A1 | 24-01-2019 | AR 113250 A1 | 11-03-2020 |
| | | US 2019023614 A1 | 24-01-2019 |
| | | US 2021147297 A1 | 20-05-2021 |
| WO 2017140784 A1 | 24-08-2017 | AU 2017219210 A1 | 26-07-2018 |
| | | BR 112018014547 A2 | 11-12-2018 |
| | | CL 2018002141 A1 | 23-11-2018 |
| | | CN 108698929 A | 23-10-2018 |
| | | CO 2018007004 A2 | 10-07-2018 |
| | | DK 3416923 T3 | 21-06-2021 |
| | | EP 3416923 A1 | 26-12-2018 |
| | | ES 2870953 T3 | 28-10-2021 |
| | | KR 20180123671 A | 19-11-2018 |
| | | PE 20181476 A1 | 13-09-2018 |
| | | PL 3416923 T3 | 25-10-2021 |
| | | PT 3416923 T | 25-05-2021 |
| | | RU 2018131974 A | 19-03-2020 |
| | | UA 123163 C2 | 24-02-2021 |
| | | US 2019135695 A1 | 09-05-2019 |
| | | US 2020399179 A1 | 24-12-2020 |
| | | WO 2017140784 A1 | 24-08-2017 |
| | | ZA 201804463 B | 25-11-2020 |
| CN 110759693 A | 07-02-2020 | NONE | |

EPO FORM P0459

For more details about this annex : see Official Journal of the European Patent Office, No. 12/82